# EUROPÄISCHE PATENTSCHRIFT

(11) **EP 1 142 964 B1**
(45) Veröffentlichungstag und Bekanntmachung des Hinweises auf die Patenterteilung: **31.05.2006**
(21) Anmeldenummer: 01106659.4
(22) Anmeldetag: 16.03.2001
(51) Int. Cl.: C09D 5/18, C09K 21/14, C08K 5/00, C08K 5/3492, C08K 5/49

(54) **Brandschutzbeschichtung**
Fireproof coating
Revêtement ignifuge

(30) Priorität: 30.03.2000 DE 10015889
(43) Veröffentlichungstag der Anmeldung: 10.10.2001
(73) Patentinhaber: Clariant Produkte (Deutschland) GmbH, 65929 Frankfurt am Main (DE)
(72) Erfinder: Thewes, Volker, 40789 Monheim (DE); Pirig, Wolf-Dieter, 53879 Euskirchen (DE)

(56) Entgegenhaltungen:
- WO-A-98/45364
- WO-A-99/11702
- DE-A- 19 919 707
- GB-A- 2 272 444
- US-A- 6 166 114

## Beschreibung

Die Erfindung betrifft eine dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen.

Dämmschichtbildende Brandschutzbeschichtungen, auch Intumeszenzbeschichtungen genannt, zeichnen sich dadurch aus, daß sie im Brandfall unter entsprechender Temperatureinwirkung aufschäumen und durch dieses Aufschäumen der vorgenannten Brandschutzbeschichtung der Wärmedurchtritt auf Stahlkonstruktionen, Decken, Wände, Kabel, Rohre und dergleichen verhindert oder zumindest behindert wird.

Die US 4,965,296 A1 beschreibt ein flammhemmendes Material, das sich aus einem flammhemmenden Beschichtungsmaterial und einem elektrisch leitfähigen Material zusammensetzt. Das flammhemmende Beschichtungsmaterial besteht dabei aus schaum- und kohlenstoffbildenden Substanzen, einer gaserzeugenden Verbindung, einem filmbildenden Bindemittel und entsprechenden Lösemitteln. Fakultativ können übliche, weitere Inhaltsstoffe anwesend sein.

In der US 4,879,320 wird eine ähnliche flammhemmende Zusammensetzung beschrieben, der jedoch anstelle eines leitfähigen Materials ein keramisches Fasermaterial zugesetzt ist.

Die US 5,225,464 beschreibt eine wäßrige Intumeszenz-Formulierung auf Basis eines Reaktionsproduktes aus Phosphorsäure, Melamin und Monoammoniumphosphat, welche mit Pentaerythritol, chlorierten Kohelnwasserstoffen und weiteren Verbindungen, insbesondere Polyvinylacetat, ein verbessertes intumeszenz-Beschichtungsmaterial liefern soll.

Die DE 42 18 184 A1 beschreibt ein wäßriges Bindemittelgemisch, bestehend aus einer wäßrigen Lösung und/oder Dispersion einer Kombination aus a) mindestens einem in Gegenwart der Komponente b) in Wasser löslichen und/oder dispergierbaren, Urethangruppen aufweisenden NCO-Vorpolymer mit blockierten Isocyanatgruppen und b) einer Polyamin-Komponente, bestehend aus mindestens einem (cyclo)aliphatischen Polyamin mit mindestens zwei primären und/oder sekundären Aminogruppen.

Die DE 43 43 668 schließlich beschreibt aufblähbare, flammhemmende Überzugsmassen, bestehend mindestens aus
4 bis 25 Gewichts-% eines filmbildenden Bindemittels,
10 bis 4 Gewichts-% Ammoniumpolyphosphat,
8 bis 40 Gewichts-% mindestens einer bei Hitzeeinwirkung carbonisierenden Substanz,
6 bis 25 Gewichts-% eines Treibmittels,
0 bis 5 Gewichts-% Dispergiermittel,
0 bis 25 Gewichts-% Füllstoffe.

Nachteilig bei den vorgenannten Brandschutzbeschichtungen ist insgesamt, daß sie halogenhaltig sind und/oder nach Trocknung keine ausreichende Wasserfestigkeit aufweisen.

Insbesondere ist die Verwendung von Melamin als Treibmittel nachteilig zu bewerten, da es in wässerigen Aufschlämmungen basisch reagiert. Somit steht es jeder in wässeriger Lösung sauer reagierenden Komponente einer dämmschichtbildenden Brandschutzbeschichtung als Reaktionspartner zur Verfügung. Bekanntermaßen reagieren Melamin und Ammoniumpolyphosphat in wässeriger Lösung unter Freisetzung von Ammoniak (NH₃). Diese Reaktion kann auch in einer getrockneten dämmschichtbildenden Brandschutzbeschichtung in Gegenwart von erhöhter Temperatur und erhöhter Luftfeuchtigkeit stattfinden und somit die brandschutztechnischen Eigenschaften der Beschichtung reduzieren.

Es ist daher Aufgabe der vorliegenden Erfindung, dämmschichtbildende Brandschutzbeschichtungen zur Verfügung zu stellen, die ohne Verwendung von Melamin bzw. Ammoniumpolyphosphat nach Trocknung wasserfest sind und auch bei erhöhter Luftfeuchtigkeit und erhöhter Temperatur nur extrem geringe Mengen an NH₃ freisetzen.

Diese Aufgabe wird gelöst durch eine dämmschichtbildende Brandschutzbeschichtung der eingang beschriebenen Art, dadurch gekennzeichnet, daß sie als Treibmittel und als schaumschichtbildende Substanz ein Melaminpolyphosphat enthält.

Bevorzugt entspricht das Melaminpolyphosphat der Formel (HMPO₃)ₙ , in der M für Melamin steht und n ≥ 2, insbesondere 2 bis 10.000 ist.

Bei Melaminpolyphosphat handelt es sich um ein Polymer aus Melamin- und Phosphateinheiten, die zu kürzeren und längeren Ketten verknüpft sind. Die Verteilung der Melamin- und Phosphateinheiten kann regelmäßig oder unregelmäßig sein, sie können gegebenenfalls auch in sich selber polymerisiert sein. Es können auch Derivate des Melamins, wie Melem, Melam und andere enthalten sein.

Entsprechend seiner unterschiedlichen Kettenlänge und der Verteilung bzw. Häufung der Melamin- und Phosphateinheiten kann das Melaminpolyphosphat in seinen Eigenschaften innerhalb gewisser Grenzen variieren.

Melaminpolyphosphat ist beispielsweise in der PCT/WO 98/45364 näher beschrieben, es wird dort auch als Melaminsalz der Polyphosphorigen Säure bezeichnet, wobei die polymere Kette aus (HMPO₃)-Einheiten [M steht für Melamin] besteht und n ≥2 , insbesondere 5 bis 10.000 ist.

Melaminpolyphosphat wird üblicherweise durch Erhitzen von Melaminpyrophosphat unter Stickstoffatmosphäre bei Temperaturen von 290 °C und mehr bis zur Gewichtskonstanz erhalten (PCT/WO 98/08898).

Bevorzugt ist die erfindungsgemäße dämmschichtbildende Brandschutzbeschichtung frei von Ammoniumpolyphosphat.

Bevorzugt ist die erfindungsgemäße dämmschichtbildende Brandschutzbeschichtung frei von Melamin und/oder Dicyandiamiden.

Bevorzugt enthält die dämmschichtbildende Brandschutzbeschichtung
5 bis 30 Gewichtsteile filmbildendes Bindemittel,
5 bis 25 Gewichtsteile einer kohlenstoffbildenden Substanz,
30 bis 70 Gewichtsteile Melaminpolyphosphat und
10 bis 50 Gewichtsteile an üblichen Hilfs- und Zusatzstoffen.

Besonders bevorzugt enthält die dämmschichtbildende Brandschutzbeschichtung
10 bis 20 Gewichtsteile filmbildendes Bindemittel,
7 bis 15 Gewichtsteile einer kohlenstoffbildenden Substanz,
40 bis 60 Gewichtsteile Melaminpolyphosphat und
20 bis 40 Gewichtsteile an üblichen Hilfs- und Zusatzstoffen.

Bevorzugt enthält die dämmschichtbildende Brandschutzbeschichtung als filmbildende Bindemittel
Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylat-Copolymer,
Styrol/Acrylat-Copolymer,
Vinyl/Acrylat-Copolymer,
Selbstvemetzende Polyurethan-Dispersionen.

Bevorzugt enthält die dämmschichtbildende Brandschutzbeschichtung als kohlenstoffbildende Substanzen Kohlenhydrate.

Bevorzugt werden als Kohlenhydrate Pentaerythrit, Dipentaerythrit, Tripentaerythrit und/oder Polykondensate des Pentaerythrits eingesetzt.

Bevorzugt enthält die dämmschichtbildende Brandschutzbeschichtung als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen.

Bevorzugt ist die dämmschichtbildende Brandschutzbeschichtung gemäß der Erfindung halogenfrei.

Die erfindungsgemäße dämmschichtbildende Brandschutzbeschichtung setzt bei Lagerung unter erhöhter (Luft)feuchtigkeit (bis zu 100 % rel. Feuchte) und erhöhter Temperatur (ca. 75°C) weniger als 100 ppm NH₃ frei.

Die erfindungsgemäße Brandschutzbeschichtung (Intumeszenzbeschichtung) gelangt in Form eines streich-, spritz- oder rollfähigen Anstrichmittels zum Schutz von unterschiedlichsten Untergründen, vorzugsweise von Stahl, Holz, Elektrokabeln und Rohren, zum Einsatz.

In den folgenden Beispielen wurden Intumeszenzbeschichtungen hergestellt, auf Normstahlplatten aufgetragen und ihre Wirksamkeit ermittelt. Die Prüfung der Isolierfähigkeit erfolgte nach DIN 4102, Teil 8 (1986). Die Wasserfestigkeit wurde geprüft , indem die beschichteten Normstahlplatten vor der Prüfung der Isolierfähigkeit im Klimaschrank bei 40°C und 95 % iger Luftfeuchtigkeit über 4 Wochen gelagert wurden.

Zur Feststellung der NH₃-Freisetzung werden die getrockneten Probenplatten in ein geschlossenes Glassystem gegeben. Dieses besteht aus einer 500 ml-Glasflasche und einem Glasdeckel mit 2 Hähnen. Zur Simulation der Luftfeuchtigkeit (ca. 100 % rel. Feuchte) befindet sich in dem Glassystem eine Glaswanne mit 10 ml Leitungswasser. Das Glassystem wird mit einem geschlossenen Hahn bei 75°C in einen Umlufttrockenschrank gestellt. Der zweite Hahn wird nach 10 Minuten im Trockenschrank ebenfalls geschlossen. Die Verweildauer der Flasche im Trockenschrank beträgt von da ab 120 Minuten. Danach wird die Flasche aus dem Trockenschrank genommen und ein Hahn mittels eines Zwischenstückes mit einem Dräger- Röhrchen versehen. An den zweiten Hahn wird Stickstoff in einer Geschwindigkeit von 5 I pro Stunde angelegt. Die Flasche wird 30 Minuten ausgeblasen und die freigesetzten Ammoniak-Mengen werden direkt am Dräger-Röhrchen abgelesen.

In den Beispielen wurden folgende Produkte eingesetzt:
® Pliolite (Solid) (Goodyear/Frankreich)
Es handelt sich um ein newtonisches, thermoplastisches Harz auf Basis von Vinyltoluol/ Acrylat-Copolymere.
® Exolit AP 462 (Clariant GmbH, Frankfurt am Main)
Es handelt sich um ein mikroverkapseltes Ammoniumpolyphosphat auf Basis ® Exolit AP 422, das nach dem Verfahren der EP-B-0 180 795 hergestellt wurde und etwa 10 Masse% Kapselmaterial, bestehend aus einem gehärteten
Melamin/Formaldehyd-Harz, enthält.
Bei ® Exolit AP 422 (Clariant GmbH, Frankfurt am Main) handelt es sich um ein freifließsendes, pulverförmiges, in Wasser schwer lösliches Ammoniumpolyphosphat der Formel (NH₄PO₃) mit n = 20 bis 1000, insbesondere 500 bis 1000. Der Anteil der Teilchen mit einer Teilchengröße kleiner 45 µm beträgt mehr als 99 %.

### Beispiel 1 (Vergleich)

Es wurden die folgenden Substanzen nacheinander vermischt und anschließend entsprechend auf die zu prüfende Platte aufgetragen:
38 Gewichtsteile ® Hostaflam AP 462
10 Gewichtsteile ® Pliolite (Solid)
8 Gewichtsteile Melamin
8 Gewichtsteile Dipentaerythrit
8 Gewichtsteile Titandioxid
ad 100 Gewichtsteile Verdicker, Weichmacher, Lösungsmittel.

Die Brandprüfung der beschichteten Platte gemäß DIN 4102 ergab die Brandklasse F 30. Nach der Lagerung im Klimaschrank ergab die Brandklasse ebenfalls F 30. Die Messung der NH₃-Freisetzung ergab 4625 ppm NH₃.

### Beispiel 2 (Erfindung)

Es wurden die folgenden Substanzen nacheinander vermischt und anschließend entsprechend auf die zu prüfende Platte aufgetragen:
9 Gewichtsteile ® Pliolite (Solid)
52 Gewichtsteile Melaminpolyphosphat
7 Gewichtsteile Dipentaerythrit
7 Gewichtsteile Titandioxid
ad 100 Gewichtsteile Verdicker, Weichmacher, Lösungsmittel.

Die Brandprüfung der beschichteten Platte gemäß DIN 4102 ergab die Brandklasse F 30.
Nach der Lagerung im Klimaschrank ergab die Brandklasse ebenfalls F 30.
Die Messung der NH₃-Freisetzung ergab 35 ppm NH₃.

### Beispiel 3 (Vergleich)

Es wurden die folgenden Substanzen nacheinander vermischt und anschließend entsprechend auf die zu prüfende Platte aufgetragen:
30 Gewichtsteile ® Hostaflam AP 422
22 Gewichtsteile Polyvinylacetat-Copolymer (50%ig)
19 Gewichtsteile Melamin
13 Gewichtsteile Pentaerythrit
5 Gewichtsteile Titandioxid
ad 100 Gewichtsteile Verdicker, Füllstoffe, Wasser, Dispergiermittel, Konservierungsmittel

Die Brandprüfung der beschichteten Platte gemäß DIN 4102 ergab die Brandklasse F 30. Nach der Lagerung im Klimaschrank wurde die Brandklasse F 30 nicht mehr erreicht.
Die Messung der NH₃-Freisetzung ergab 5200 ppm NH₃.

### Beispiel 4 (Erfindung)

Es wurden die folgenden Substanzen nacheinander vermischt und anschließend entsprechend auf die zu prüfende Platte aufgetragen:
20 Gewichtsteile Polyvinylacetat-Copolymer (50 %ig)
55 Gewichtsteile Melaminpolyphosphat
11 Gewichtsteile Pentaerythrit
4 Gewichtsteile Titandioxid
ad 100 Gewichtsteile Verdicker, Füllstoffe, Wasser, Dispergiermittel, Konservierungsmittel

Die Brandprüfung der beschichteten Platte gemäß DIN 4102 ergab die Brandklasse F 30. Nach der Lagerung im Klimaschrank ergab die Brandklasse F 30.
Die Messung der NH₃-Freisetzung ergab 50 ppm NH₃.

### Beispiel 5 (Vergleich)

Es wurden die folgenden Substanzen nacheinander vermischt und anschließend entsprechend auf die zu prüfende Platte aufgetragen:
30 Gewichtsteile ® Exolit AP 422
22 Gewichtsteile aliphatische Urethan-Acryl-Hybrid Dispersion (30 %ig)
17 Gewichtsteile Melamin
12 Gewichtsteile Di-Pentaerythrit
5 Gewichtsteile Titandioxid
ad 100 Gewichtsteile Verdicker, Füllstoffe, Wasser, Dispergiermittel, Konservierungsmittel.

Die Brandprüfung der beschichteten Platte gemäß DIN 4102 ergab die Brandklasse F 60. Nach der Lagerung im Klimaschrank die Brandklasse noch F 30. Die Messung der NH₃-Freisetzung ergab 4850 ppm NH₃.

### Beispiel 6 (Erfindung)

Es wurden die folgenden Substanzen nacheinander vermischt und anschließend entsprechend auf die zu prüfende Platte aufgetragen:
19 Gewichtsteile aliphatische Urethan-Acryl-Hybrid Dispersion (30%ig)
53 Gewichtsteile Melaminpolyphosphat
10 Gewichtsteile Di-Pentaerythrit
4 Gewichtsteile Titandioxid
ad 100 Gewichtsteile Verdicker, Füllstoffe, Wasser, Dispergiermittel, Konservierungsmittel

Die Brandprüfung der beschichteten Platte gemäß DIN 4102 ergab die Brandklasse F 60.
Nach der Lagerung im Klimaschrank ergab die Brandklasse F 60.
Die Messung der NH₃ ― Freisetzung ergab 40 ppm NH₃.

Wie aus den Beispielen hervorgeht, kann durch den Einsatz von Melaminpolyphosphat die NH₃-Freisetzung um einen Faktor von mindestens 100 gegenüber Melamin verringert werden.

## Patentansprüche

1. Dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen, **dadurch gekennzeichnet, dass** sie
5 bis 30 Gewichtstelle filmbildendes Bindemittel,
5 bis 25 Gewichtsteile einer kohlenstoffblidenden Substanz, wobei als kohlenstoffbildende Substanzen Kohlenhydrate enthalten sind
30 bis 70 Gewichtstelle Melaminpolyphosphat und
10 bis 50 Gewichtstelle an üblichen Hilfs- und Zusatzstoffen
und als Treibmittel und als schaumschichtbildende Substanz ausschließlich Melaminpolyphosphat enthält und dass als filmbildende Bindemittel Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester, Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylol-Copolymer,
Styrol/Acrylat-Polymere,
Vinyl/Acrylat-Copolymere,
selbstvemetzende Polyurethan-Dispersionen
enthalten sind.

2. Dämmschichtbildende Brandschutzbeschichtung nach Anspruch 1, **dadurch gekennzeichnet, dass** das Melaminpolyphosphat der Formel (HMPO₃)ₙ, in der M für Melamin steht und n ≥ 2, insbesondere 2 bis 10.000 ist, entspricht.

3. Dämmschichtbildende Brandschutzbeschichtung nach Anspruch 1 oder 2, **dadurch gekennzeichnet, dass** sie kein Ammoniumpolyphosphat enthält.

4. Dämmschichtbildende Brandschutzbeschichtung nach einem oder mehreren der Ansprüche 1 bis 3, **dadurch gekennzeichnet, dass** sie kein Melamin und/oder Dicyandiamide enthält.

5. Dämmschichtbildende Brandschutzbeschichtung nach einem oder mehreren der Ansprüche 1 bis 4, **dadurch gekennzeichnet, dass** sie
10 bis 20 Gewichtsteile filmbildendes Bindemittel,
7 bis 15 Gewichtsteile einer kohlenstoffbildenden Substanz,
40 bis 60 Gewichtsteile Melaminpolyphosphat und
20 bis 40 Gewichtsteile an üblichen Hilfs- und Zusatzstoffen
enthält.

6. Dämmschichtbildende Brandschutzbeschichtung nach einem oder mehreren der Ansprüche 1 bis 5, **dadurch gekennzeichnet, dass** als Kohlenhydrate Pentaerythrit, Dipentaerythrit, Tripentaerythrit und/oder Polykondensate des Pentaerythrits eingesetzt werden.

7. Dämmschichtbildende Brandschutzbeschichtung nach einem der Ansprüche 1 bis 6, **dadurch gekennzeichnet, dass** als Hilfs- und Zusatzstoffe Glasfasern, Mineralfasem, Kaolin, Talkum, Aluminiumoxid, Aluminiumhydroxid, Magnesiumhydroxid, Fällungskieselsäuren, Silikate und/oder pulverische Cellulosen enthalten sind.

8. Dämmschichtbildende Brandschutzbeschichtung nach einem der Ansprüche 1 bis 7, **dadurch gekennzeichnet, dass** sie halogenfrei ist.

9. Dämmschichtbildende Brandschutzbeschichtung nach einem der Ansprüche 1 bis 8, **dadurch gekennzeichnet, dass** sie bei Lagerung unter erhöhter Feuchtigkeit bis zu 100 % rel. Feuchte und erhöhter Temperatur (ca. 75 °C) weniger als 100 ppm NH₃ freisetzt.

## Claims

1. A flame-retardant coating which forms an insulating layer and is based on substances which carbonize and which form a foam layer in the event of a fire, on film-forming binders, on blowing agents and on customary auxiliaries and additives, which comprises
from 5 to 30 parts by weight of film-forming binder,
from 5 to 25 parts by weight of a substance which carbonizes, where the substances present which carbonize comprise carbohydrates,
from 30 to 70 parts by weight of melamine polyphosphate, and
from 10 to 50 parts by weight of customary auxiliaries and additives
and which comprises only melamine polyphosphate as blowing agent and as substance which forms a foam layer, wherein the film-forming binders present comprise
homopolymers based on vinyl acetate,
copolymers based on vinyl acetate, ethylene and vinyl chloride,
copolymers based on vinyl acetate and the vinyl ester of a long-chain branched carboxylic acid,
copolymers based on vinyl acetate and di-n-butyl maleate,
copolymers based on vinyl acetate and acrylates,
copolymers based on styrene and acrylates, and/or
copolymers based on acrylates,
vinyltoluene-acrylol copolymer,
styrene-acrylate polymers,
vinyl-acrylate copolymers,
self-crosslinking polyurethane dispersions.

2. A flame-retardant coating which forms an insulating layer, as claimed in claim 1, wherein the melamine polyphosphate has the formula (HMPO₃)ₙ, where M is melamine and n ≥ 2, in particular from 2 to 10 000.

3. A flame-retardant coating which forms an insulating layer, as claimed in claim 1 or 2, wherein no ammonium polyphosphate is present.

4. A flame-retardant coating which forms an insulating layer, as claimed in one or more of claims 1 to 3, wherein no melamine and/or dicyandiamides are present.

5. A flame-retardant coating which forms an insulating layer, as claimed in one or more of claims 1 to 4, which comprises
from 10 to 20 parts by weight of film-forming binder,
from 7 to 15 parts by weight of a substance which carbonizes,
from 40 to 60 parts by weight of melamine polyphosphate, and
from 20 to 40 parts by weight of customary auxiliaries and additives.

6. A flame-retardant coating which forms an insulating layer, as claimed in one or more of claims 1 to 5, wherein the carbohydrates used comprise pentaerythritol, dipentaerythritol, tripentaerythritol and/or poly-condensates of pentaerythritol.

7. A flame-retardant coating which forms an insulating layer, as claimed in any of claims 1 to 6, wherein the auxiliaries or additives present comprise glass fibers, mineral fibers, kaolin, talc, aluminum oxide, aluminum hydroxide, magnesium hydroxide, precipitation silicas, silicates and/or pulverulent celluloses.

8. A flame-retardant coating which forms an insulating layer, as claimed in any one of claims 1 to 7, which is halogen-free.

9. A flame-retardant coating which forms an insulating layer, as claimed in any of claims 1 to 8, which releases less than 100 ppm of NH₃ when stored under high-moisture conditions at up to 100% rel. humidity, and at increased temperature (about 75°C).

## Revendications

1. Revêtement ignifuge formant couche isolante à base de substances formant en cas d'incendie une couche de mousse et génératrice de carbone, de liants filmogènes, d'agents porogènes et d'adjuvants et additifs usuels, **caractérisé en ce qu'**il contient :
5 à 30 parties en poids d'un liant filmogène,
5 à 25 parties en poids d'une substance génératrice de carbone, les substances génératrices de carbone qui sont présentes étant des hydrates de carbone,
30 à 70 parties en poids de polyphosphate de mélamine et
10 à 50 parties en poids d'adjuvants et additifs usuels,
et, en tant qu'agents porogènes et en tant que substances formant couche de mousse, exclusivement du polyphosphate de mélamine, et **en ce qu'**il contient en tant que liants filmogènes
des homopolymères à base d'acétate de vinyle,
des copolymères à base d'acétate de vinyle, d'éthylène et de chlorure de vinyle,
des copolymères à base d'acétate de vinyle et de l'ester vinylique d'un acide carboxylique ramifié à longue chaîne,
des copolymères à base d'acétate de vinyle et de maléate de di-n-butyle,
des copolymères à base d'acétate de vinyle et d'un ester de l'acide acrylique,
des copolymères à base de styrène et d'esters de l'acide acrylique et/ou
des copolymères à base d'esters de l'acide acrylique,
un copolymère vinyltoluène/acrylate,
un copolymère styrène/acrylate,
un copolymère vinyl/acrylate,
une dispersion de polyuréthanne autoréticulable.

2. Revêtement ignifuge formant couche isolante selon la revendication 1, **caractérisé en ce que** le polyphosphate de mélamine correspond à la formule (HMPO₃)ₙ dans laquelle M est la mélamine et n ≥ 2, et en particulier n est compris entre 2 et 10 000.

3. Revêtement ignifuge formant couche isolante selon la revendication 1 ou 2, **caractérisé en ce qu'**il ne contient pas de polyphosphate d'ammonium.

4. Revêtement ignifuge formant couche isolante selon l'une ou plusieurs des revendications 1 à 3, **caractérisé en ce qu'**il ne contient pas de mélamine et/ou de dicyanodiamides.

5. Revêtement ignifuge formant couche isolante selon l'une ou plusieurs des revendications 1 à 4, **caractérisé en ce qu'**il contient
10 à 20 parties en poids d'un liant filmogène,
7 à 15 parties en poids d'une substance génératrice de carbone,
40 à 60 parties en poids de polyphosphate de mélamine et
20 à 40 parties en poids d'adjuvants et additifs usuels.

6. Revêtement ignifuge formant couche isolante selon l'une ou plusieurs des revendications 1 à 5, **caractérisé en ce qu'**on utilise en tant qu'hydrates de carbone le pentaérythritol, le dipentaérythritol, le tripentaérythritol et/ou des produits de polycondensation du pentaérythritol.

7. Revêtement ignifuge formant couche isolante selon l'une des revendications 1 à 6, **caractérisé en ce qu'**il contient en tant qu'adjuvants et additifs des fibres de verre, des fibres minérales, du kaolin, du talc, de l'oxyde d'aluminium, de l'hydroxyde d'aluminium, de l'hydroxyde de magnésium, des silices précipitées, des silicates et/ou des celluloses en poudre.

8. Revêtement ignifuge formant couche isolante selon l'une des revendications 1 à 7, **caractérisé en ce qu'**il est exempt d'halogènes.

9. Revêtement ignifuge formant couche isolante selon l'une des revendications 1 à 8, **caractérisé en ce que**, après stockage en présence d'une humidité élevée, allant jusqu'à 100 % d'humidité relative, et d'une température élevée (environ 75°C), il libère moins de 100 ppm de NH₃.
